# EUROPEAN PATENT SPECIFICATION

(11) **EP 3 694 079 B1**
(45) Date of publication and mention of the grant of the patent: **30.11.2022**
(21) Application number: 19382083.4
(22) Date of filing: 05.02.2019
(51) Int. Cl.: H02J 50/10, H02J 7/02

(54) **WIRELESS POWER TRANSFER SYSTEMS FOR ELECTRIC VEHICLES**
SYSTEM ZUR DRAHTLOSEN STROMÜBERTRAGUNG FÜR ELEKTROFAHRZEUGE
SYSTÈMES DE TRANSFERT DE PUISSANCE SANS FIL POUR VÉHICULES ÉLECTRIQUES

(43) Date of publication of application: 12.08.2020
(73) Proprietor: Mahle International GmbH, 70376 Stuttgart (DE)
(72) Inventor: GONZÁLEZ ESPIN, Francisco, 03205 ELCHE (Alicante) (ES); LÄMMLE, Christopher, 70567 STUTTGART (DE); DEISCHL, Daniel, 72202 NAGOLD (DE)
(74) Representative: Herrero & Asociados, S.L.

(56) References cited:
- US-A1- 2014 340 027
- US-A1- 2017 279 309
- US-A1- 2018 118 040
- US-A1- 2018 281 608

## Description

The present invention refers to wireless power transfer systems for electric vehicles (EV).

### Background of the invention

Wireless power transfer (WPT) using magnetic resonance is the technology which could set humans free from the annoying wires. In fact, the WPT adopts the same basic theory which has already been developed for at least 30 years with the term inductive power transfer. WPT technology has been developing rapidly in recent years. At kilowatts power level, the transfer distance increases from several millimeters to several hundred millimeters with a grid to load efficiency above 90%. The advances make the WPT very attractive to the electric vehicle (EV) charging applications in both stationary and dynamic charging scenarios. By introducing WPT in EVs, the obstacles of charging time, range, and cost can be easily mitigated and battery technology is not as relevant in the EVs market.

Conventionally, in power conversion, when AC is converted to low voltage DC, or AC from one frequency to another, the AC is usually rectified and smoothed to obtain a fixed voltage at fixed frequency. Once this is accomplished, the power is then routed to an inverter to obtain the final output with variable voltage and variable frequency. The DC voltage that is fed into the inverter is called the DC link. As the name implies, the two sources are linked together with a filter capacitor.

In electric vehicle (EV) applications, the DC link capacitor is used as a load-balancing energy storage device. The DC link capacitor may be placed between the DC battery and the AC, i.e. the load side of the voltage inverter. The capacitor is placed parallel to the battery and to a DC-to-DC battery charger, maintaining a solid voltage across the inverter. The DC link capacitor helps protecting the inverter network from momentary voltage spikes, surges and EMI.

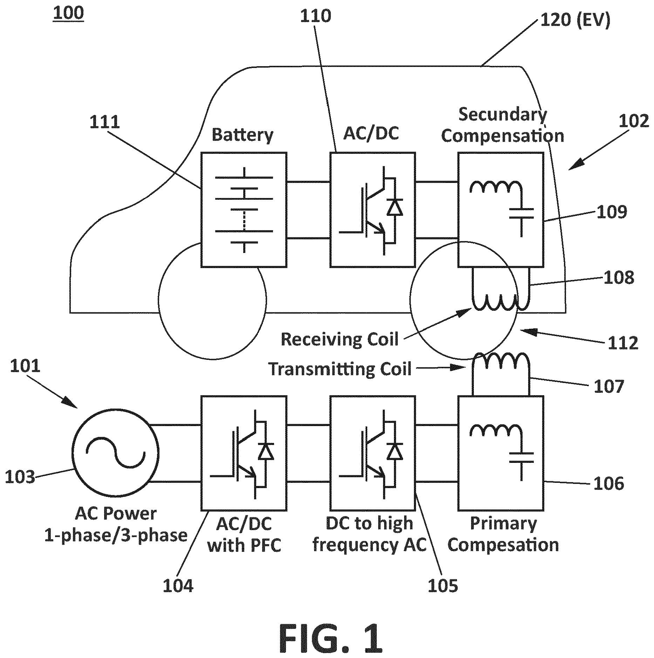

A known WPT system (100) for an EV (120) is shown in figure 1, where the basic functional blocks for inductive charging are shared between a ground assembly (GA) (101) and a vehicle assembly (VA) (102).

The GA (101) of the WPT system (100) comprises an AC/DC converter (104) with power factor correction (PFC) that converts the single or three phase power source (103) to a regulated DC power source. The GA (101) of the WPT system (100) also comprises a DC to high frequency (HF) AC converter (105) that generates a square wave voltage with a nearly constant frequency and duty cycles. The GA (101) comprises a primary compensation circuit (106) which is a passive circuit network that compensates the transmitting coil inductance in order to reduce the amount of reactive power delivered by the DC to HF AC converter (105).

The WPT system (100) comprises an inductive charging coil assembly (112) comprising a transmitting GA coil (107) in the ground side, GA (101) and a receiving VA coil (108) located at the vehicle side, VA (102).

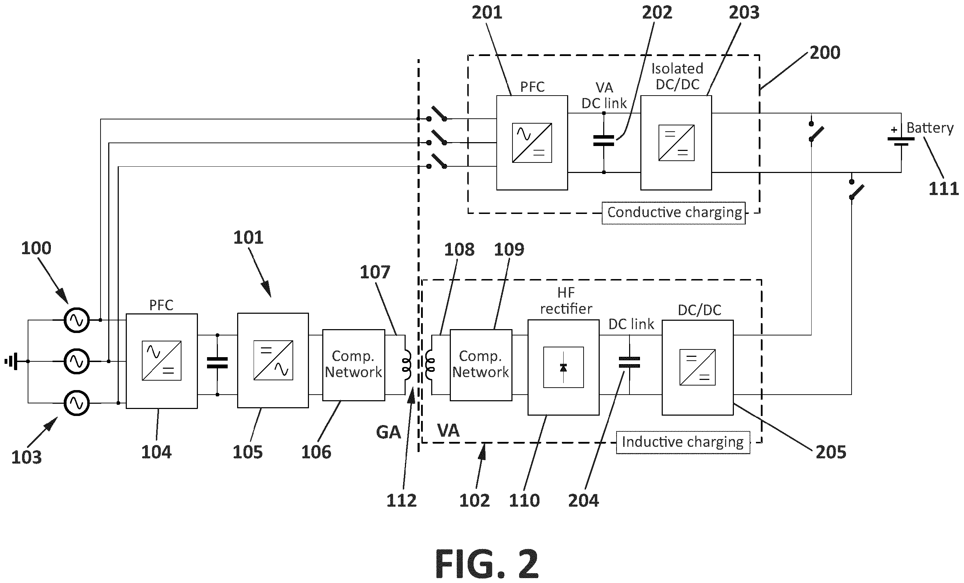

The VA (102) comprises a secondary compensation circuit (109) which is a passive circuit network that compensates the receiving coil inductance in order to maximize the transferred power at electrical resonance. The VA (102) comprises an AC/DC Rectifier (110) and/or a DC/DC battery charger (205) (shown in figure 2)(that may or may not include battery charging algorithms/charging strategy) and the high voltage battery (111).

The charging of the high voltage battery (111) can potentially be handled by both assemblies the GA (101) and the VA (102) of the WPT system (100), which design can determine an optimal WPT architecture.

Typically, the VA inductive charging of the WPT systems is designed without considering the potential existing conductive charger in the EV. Therefore the charging modules in the WPT are not optimized in terms of cost, volume and weight, because some of the basic functionalities of the charging modules in the VA (102) are likely to be duplicated in the conductive and inductive charging stages of the EV (120).

For instance, existing systems elements of the inductive charger of the VA as e.g. a current-doubler rectifier, an interleaved secondary control and/or an output filter stages may not be shared with the conductive charger of the VA. In these systems, it is likely that a conductive on-board charger (OBC) is connected in parallel to the battery duplicating the functionality of the aforementioned stages as shown in figure 2 that shows the conductive charging stage of the EV (120).

Figure 2 shows again, the WPT system (100) in combination with a conductive charging stage OBC (200) in the EV (120). The WPT system (100) comprises the GA (101) with the AC/DC converter (104) with power factor correction (PFC) that converts the three phase power source (103) to a regulated DC power source, the HF AC converter (105) that generates a square wave voltage, the primary compensation circuit (106) to compensate the transmitting coil inductance and the transmitting coil (107).

The VA (102) of the WPT system (100) comprises the receiving VA coil (108) located at the vehicle side of the inductive charging coil assembly (112), the secondary compensation circuit (109) to compensate the receiving coil inductance, the AC/DC Rectifier (110), a DC link capacitor (204) and a DC/DC battery charger (205).

Figure 2 shows the OBC (200) for conductive charging of the EV (120). The OBC (200) of the VA (102) comprises a three phase PFC stage (201) for the three phase power source (103), a DC link comprising a DC link capacitor (202) and an isolated DC/DC battery charger (203).

Hence, it can be seen from figure 2 that the DC link capacitors (204) and (202) of the inductive VA (102) and the OBC (200), as well as the DC/DC battery chargers (205) and (203) are duplicated.

Therefore, a battery charging system that uses inductive and conductive charging but avoids at least the aforementioned duplicities to reduce volume, weight and cost of the vehicle assembly of the EV is desired.

US2017279309A1 relates to a primary coil circuit of a ground assembly for wirelessly transferring power to a secondary coil includes: a primary coil magnetically coupled to the secondary coil and having a first terminal and a second terminal; a second capacitor having a first terminal and a second terminal connected to the first terminal of the primary coil; a first inductor having a first terminal coupled to a first input terminal of a power source and a second terminal coupled to the first terminal of the second capacitor; and a first capacitor having a first terminal coupled commonly to the second terminal of the first inductor and the first terminal of the second capacitor and a second terminal coupled commonly to the second terminal of the primary coil and a second input terminal of the power source.

The document US2014/340027 discloses wireless power systems according to the preamble of the claims 1 and 6.

### Description of the invention

This invention deals with a wireless power transfer (WPT) system that can be integrated with an already existing conductive on-board battery charger (OBC) for electric vehicles. The invention has the potential of sharing the conductive on-board charger modules with the WPT system, thus reducing volume, weight and cost of the vehicle assembly.

This invention proposes a WPT architecture including the associated power converter topologies with proposed compensation and control strategies that allow integrating the WPT system with charging modules of an already existing conductive charging system in the EV, thus optimizing the EV volume, weight and cost.

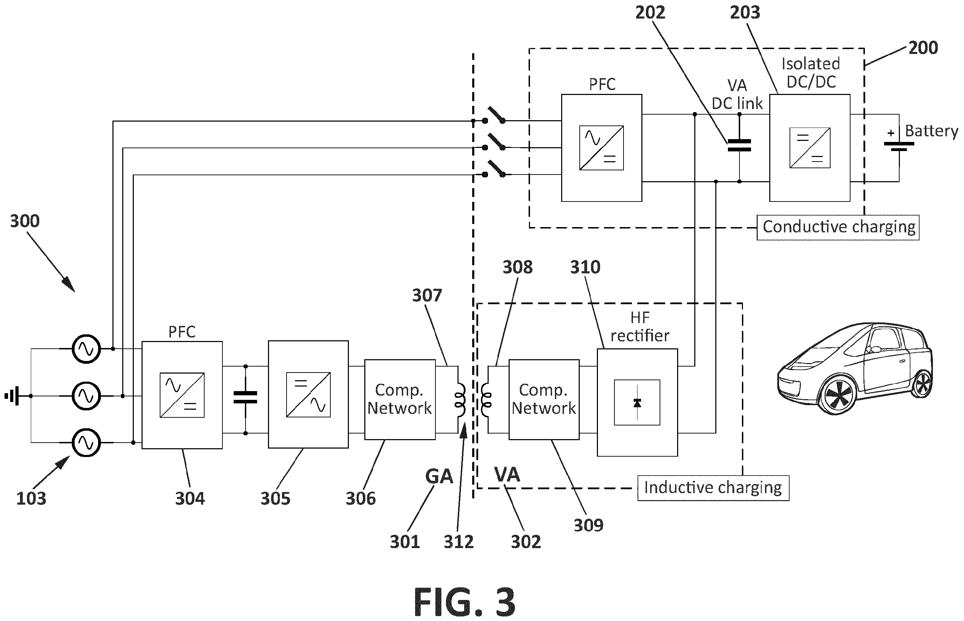

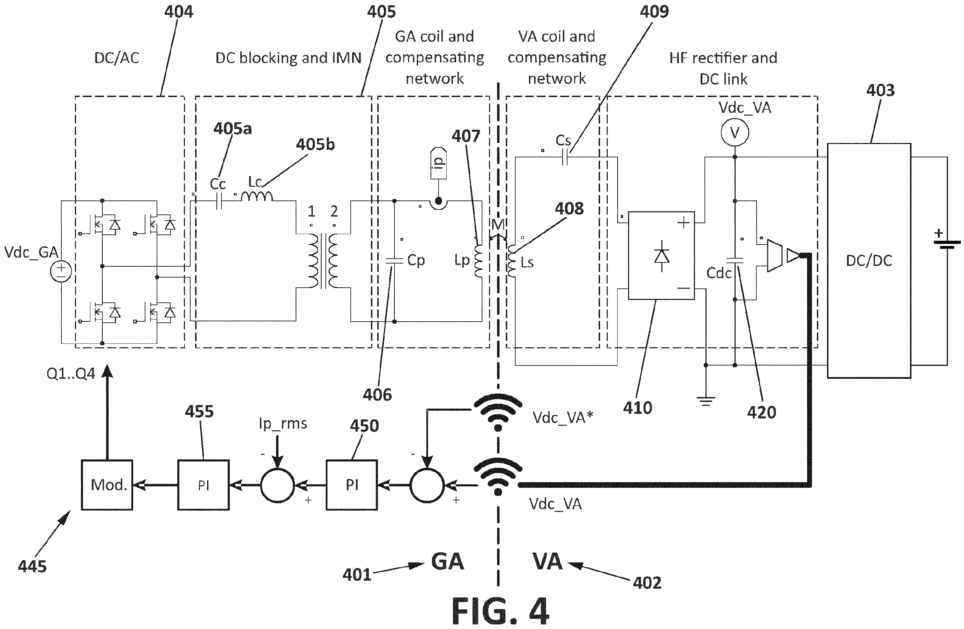

In a first aspect, it is proposed an example of a WPT system for an EV according to the present invention. The WPT system comprises a GA and a VA. The GA comprises a GA transmitter coil and the VA comprises a VA receiver coil magnetically coupled to the GA transmitter coil. This WPT system can correspond to figures 3 and 4.

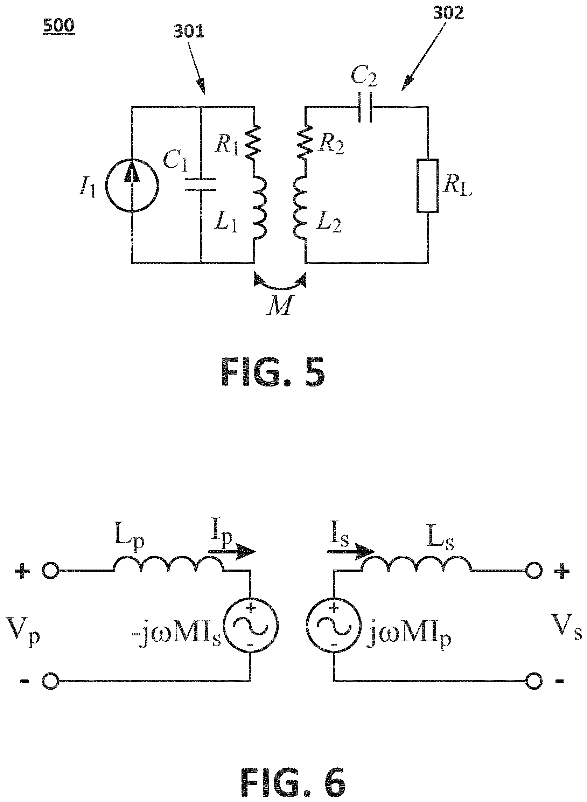

The WPT comprises a compensation strategy. The compensation strategy comprises a parallel-series compensation network that permits obtaining a voltage **V_{VA}** in the VA receiver coil which amplitude is proportional to an effective current **I_{p_rms}** flowing through the GA transmitter coil. A compensation network is shown in figures 5 and 6.

The voltage **V_{VA}** in the VA receiver coil can be converted into a continuous voltage with a rectifier comprised in the VA of the EV. Hence, a continuous **V_{dc_VA}** of the voltage source **V_{VA}** is obtained in the VA receiver coil of the WPT.

The WPT comprises a control strategy stage to adjust the continuous voltage **V_{dc_VA}** in order to reach a reference DC link voltage. For this action, the control strategy stage comprises two nested control loops: a voltage control loop receiving as inputs the continuous **V_{dc_VA}** and the reference DC link voltage and a current control loop receiving as inputs the current **I_{p_rms}** and the output of the voltage control loop. The reference DC link voltage is the required voltage in the DC link of the conductive charger of the EV.

Hence, the DC link of the conductive charger of the EV can be regulated with the adjusted **V_{dc_VA}** during an inductive charging process of the EV. Therefore, upon the use of the proposed compensation and control strategies, the proposed WPT can use the battery charging modules/DC link of the conductive charger during an inductive charging process of the EV and hence, duplicities in the vehicle assembly can be avoided.

The GA of the WPT can comprise a DC-to-AC converter that converts a DC source to a square wave voltage source. A duty cycle of the DC-to-AC converter may vary depending upon a control command received from the control strategy stage to obtain the adjusted **V_{dc_VA}**.

Additionally, the WPT comprises a DC blocking and impedance matching network (IMN) stage that comprises a capacitor Cc for blocking DC current that may saturate an IMN transformer. An inductor Lc can convert the square wave voltage source from the DC-to-AC converter to a current source. The IMN transformer can adapt the impedance and voltage levels to values required by the GA coil and the VA coil in the WPT.

In a second aspect, it is proposed another example of a WPT system for an EV. The WPT comprises a GA and a VA. The GA comprises a GA transmitter coil. The VA comprises a VA receiver coil magnetically coupled to the GA transmitter coil.

This WPT also comprises a compensation strategy that comprises a parallel-series compensation network to obtain a voltage **V_{VA}** in the VA receiver coil proportional to an effective current **I_{p_rms}** in the GA transmitter coil.

The WPT also comprises a control strategy stage to adjust **V_{dc_VA}** based on the reference DC link voltage. As in the first WPT, the reference DC link voltage is the required voltage in the DC link of the conductive charger of the EV.

The control strategy stage comprises two nested control loops: a voltage control loop receiving the **V_{dc_VA}** and the reference DC link voltage as inputs and a current control loop receiving the current **I_{p_rms}** and an output from the voltage control loop.

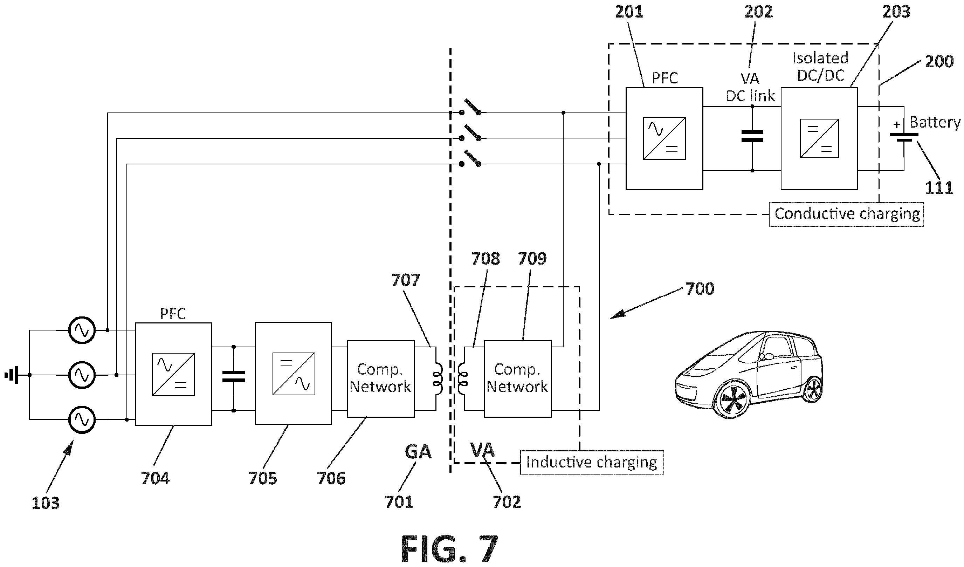

A power factor correction (PFC) stage of a conductive charger of the EV can be supplied with **V_{VA}** during an inductive charging process of the EV to obtain a continuous **V_{dc_VA}**. Hence, the continuous **V_{dc_VA}** can be used to regulate a DC link of the conductive charger of the EV. Therefore, the proposed second example of WPT uses the battery charging modules/DC link of the conductive charger during an inductive charging process. Furthermore, this WPT also uses the PFC of the conductive charger as a rectifier to obtain the continuous **V_{dc_VA}**. Hence, DC charging stages of a conventional WPT are no longer needed with the proposed WPT. The WPT of the second aspect according to the present invention can correspond to the embodiment shown in figure 7.

Similar to the first aspect, WPT comprises the DC-to-AC converter regulated with a control command of the control strategy stage to obtain the adjusted **V_{dc_VA}** and a DC blocking and impedance matching network (IMN).

In a third aspect according to the present invention, it is proposed an electrical vehicle that comprises a conductive charging stage having a DC link and the proposed WPT.

In a fourth aspect, it is proposed a method for charging an EV with a WPT system according to the present invention, the system comprising a GA and a VA, the method comprises a step for applying an effective current **I_{p_rms}** to a GA transmitter coil of the WPT, a second step for obtaining a voltage **V_{VA}** in a VA receiver coil of the WPT proportional to the **I_{p_rms},** a third step for obtaining a continuous voltage V_{dc_VA} in the VA of the WPT, a fourth step for adjusting **V_{dc_VA}** to reach a reference DC link voltage value, a fifth step for regulating a DC link of a conductive charging of the EV with the adjusted **V_{dc_VA}.** This method may be performed by the WTP according to the first WPT described in the present disclosure.

In a fifth aspect, it is proposed a method for charging an EV with a WPT system, the system comprising a GA and a VA, the method comprises a first step for applying a effective current **I_{p_rms}** to a GA transmitter coil of the WPT, a second step for obtaining a voltage **V_{VA}** in a VA receiver coil of the WPT proportional to the **I_{p_rms},** a third step for adjusting **V_{dc_VA}** to reach a reference DC link voltage, a fourth step for supplying a PFC of conductive charger of the EV with the **V_{VA}** to obtain a continuous adjusted **V_{dc_VA},** and a fifth step for regulating a DC link of the conductive charging of the EV with the continuous adjusted **V_{dc_VA}.** This method may be performed by the second WTP described in the present disclosure.

### Brief description of the drawings

For a better understanding the above explanation and for the sole purpose of providing an example, some non-limiting drawings are included that schematically depict a practical embodiment.
Figure 1 shows a conventional WPT system for an EV.
Figure 2 shows a conventional WPT system in combination with a conductive charger of an EV.
Figure 3 shows a first example of a WPT and a conductive charger according to the present invention.
Figure 4 shows the first example of the WPT according to the present invention.
Figures 5 and 6 show an example of a parallel-series compensation network.
Figure 7 shows a second example of a WPT according to the present invention.

### Description of a preferred embodiment

Figure 3 shows a first example of a WPT system (300) according to the present invention in combination with a conductive charging stage that comprises the OBC (200) with the DC link capacitor (202) for an EV. The WPT system (300) comprises a GA (301) and a VA (302) for inductive charging of the EV. Furthermore, the EV comprises an OBC (200) for conductive charging as the one shown in figure 2.

The WPT system (300) comprises an inductive charging coil assembly (312) comprising a transmitting coil (307) in the GA (301) and a receiving coil (308) in the VA (302).

The GA (301) of the WPT system (300) comprises an AC/DC converter (304) with power factor correction (PFC) that converts the three phase power source (303) to a regulated DC power source. The GA (301) of the WPT system (300) comprises an AC converter (305) generates a square wave voltage with a nearly constant frequency and duty cycles.

The WPT system (300) further comprises a compensation circuit having a primary compensation circuit (306) for the GA (301) and a secondary compensation circuit (309) for the VA (302). The compensation circuit is a parallel-series compensation network used to achieve a proposed compensation strategy according to the present invention. The proposed compensation strategy permits the inductive charging of the EV in the VA (302) to take advantage of the conductive battery charger by regulating the DC link voltage of the DC link capacitor (202) in the OBC (200). Hence, the compensation circuit (306), (309) permits the receiving coil (308) to behave as a voltage source. Hence, a voltage V_{VA} is generated in the VA receiver coil (308) having an amplitude proportional to an effective current **I_{p_rms}** in the GA transmitting coil (307). A preferred parallel-series compensation network is shown in figure 5.

The VA (302) of the WPT system (300) comprises a secondary compensation circuit (309) as part of the parallel-series compensation network which causes the receiving coil (308) of the coil assembly (312) to behave as a voltage source. The VA (302) of the WTP system (300) lacks the DC link capacitor and the DC/DC battery charger previously shown in figure 2. The output of the HF rectifier (310) can be loaded in the DC link capacitor (202). Hence, the DC link capacitor (202) and the DC/DC battery charger (203) of the OBC (200) can be shared between the conductive stage OBC (200) and the VA (302) of the WPT system (300). Therefore, the proposed WPT system (300) avoids duplicities of the charging modules/DC links in the EV (120).

Figure 4 shows a GA (401) and VA (401) wireless charging stages of a more detailed example of a WPT (400) according to the present disclosure. Figure 4 also shows the control strategy stage (445) used to obtain a desired voltage to regulate a DC link/battery charger in a conventional conductive charger of an EV.

The GA (401) comprises a DC-to-AC converter (404) that would correspond to the AC converter (305) in figure 3 and which converts a DC source **V_{dc_GA}** to a square wave voltage source which main frequency depends upon an applicable technical standard, e.g. SAE standard (e.g. 81.38kHz to 90kHz), and which duty cycle may vary depending upon regulation circuit input command from the control strategy stage (445). The DC-to-AC converter (404) can be designed to minimize switching loses by means of zero voltage switching (ZVS) or zero current switching (ZCS) techniques.

The GA (401) comprises DC blocking and Impedance Matching Network (IMN) stage (405) that includes a capacitor Cc (405a) for blocking DC current that may saturate the IMN transformer. An inductor Lc (405b) converts the square wave voltage source to a current source and an IMN transformer adapts the impedance and voltage levels to values required by the WPT coils (407), (408).

The GA (401) comprises a GA coil Lp (407) and a primary compensating network (406). The VA (402) comprises a VA coil Ls (408) and a secondary compensating network (409). The compensation network (406), (409) is a parallel-series compensation circuit. As previously mentioned, the parallel-series compensation circuit advantageously permits to generate a voltage source **V_{VA}** at the VA coil Ls (408) which amplitude depends upon the effective current **I_{p_rms}** flowing through the GA coil Lp (407). Because the DC link voltage of the conductive charging in the DC/DC battery charge (403) shall be regulated within certain boundaries to ensure the proper operation of the on-board DC-to-DC battery charger, the parallel-series compensation circuit permits regulating the DC link voltage by controlling the GA coil current **I_{p_rms}** in the GA (401).

Hence, the GA coil Lp (407) transfers energy from the GA (401) to the VA (402). The compensating network (406) allows the reactive power to be locally provided (i.e. the DC-to-AC converter (404) delivers only the active power). The VA coil Ls (408) is magnetically coupled with the GA coil Lp (407) and receives the energy transferred wirelessly from the GA coil Lp (407) which is maximized.

The VA (402) comprises a HF rectifier (410). The HF rectifier (410) converts the high frequency signal across the VA coil to DC. Figure 4 also shows a DC link capacitor Cdc (420) of the conductive charging of the EV. The WPT (400) also shows a block diagram of the proposed control strategy stage (445) used to obtain a desired continuous voltage that regulates the DC link/battery charger in the conductive charger of the EV.

As shown in figure 4, the control strategy stage (445) is composed of 2 nested control loops based on the regulation of the voltage source **V_{dc_VA}** and the GA coil current **I_{p_rms}**. For this particular implementation, the control strategy stage comprises two PI regulators (450), (455) for the voltage and current control.

**V_{da_VA*}** represents the reference DC link voltage, i.e. the required DC link voltage in the DC link. **V_{dc_VA}** is the actual DC link voltage, i.e. the voltage measured in real time. **V_{dc_VA}** is the DC value of the voltage **V_{VA}** at the VA coil Ls (408) after rectification. Furthermore, the WPT (400) comprises wireless communication means between the VA (402) and the GA (401). Hence, the reference DC link voltage **V_{da_VA*}** and the actual DC link voltage **V_{dc_VA}** can be sent from the VA (402) to the GA (401) wirelessly by using online communication as e.g. WIFI and/or offline communication as e.g. Bluetooth, NFC or the like. After some time (usually in the range of seconds or milliseconds for this application), the PI regulators (450), (455) can make the actual DC link voltage **V_{dc_VA}** equal to the reference DC link voltage **V_{da_VA*}.** Therefore the subtraction of **V_{dc_VA}** and **V_{da_VA*}** is 0 at steady state and the DC link of the conductive charger of the EV can be regulated with the adjusted **V_{dc_VA}** during an inductive charging process of the EV. Hence, the control strategy stage (445) can command the DC-to-AC converter (404) to regulate **I_{p_rms}** to obtain a **V_{dc_VA}** equal to **V_{da_VA}*.**

Figure 5 shows a parallel-series compensation circuit (500) that can be used in the proposed WPT's according to the present invention. The VA coil model in the VA (302) includes a parasitic R2 and an inductor L2. If a capacitor C2 is placed in series with the inductor L2 (compensation network) and its value is properly chosen, the impedance of the series connection of L2 and the capacitor C2 is null at the operating frequency, where the wireless transfer happens at a fixed frequency *f* = 85 *Khz.* Interestingly enough, the amplitude of this voltage depends upon the signal frequency which is constant, the coupling term, M which is also constant for a given position of the EV car relative to the GA coil L1, and the GA current **I_{p_rms}.** Therefore, this is the electrical relationship between the GA coil current **I_{p_rms}** and the VA coil voltage **V_{VA}.** Therefore, as the inductor L2 is cancelled out with the series capacitor C2, this voltage **V_{VA}** can be placed directly across the terminals of the HF rectifier (410).

Figure 6 explains the electrical behaviour of the parallel-series compensation circuit (500). In this figure, a voltage source in series with the coil inductance is shown, which models more accurately the behaviour of the coupled coils (the parasitic resistance has been neglected in this figure). The compensation of the VA coil makes Lₛ to disappear from the model, thus leaving just the voltage source, which is proportional to the frequency, the coupling term M and the primary coil current Iₚ.

Figure 7 shows an alternative example of a WPT (700) according to the present invention.

Similarly, the GA (701) of the WPT (700) comprises an AC/DC converter (704) with power factor correction (PFC) that converts the three phase power source (103) to a regulated DC power source. The GA (701) of the WPT (700) comprises an AC converter (705) that generates a square wave voltage with a nearly constant frequency and duty cycles.

The WPT (700) comprises an inductive charging coil assembly (712) comprising a transmitting coil (707) in the GA (701) and a receiving coil (708) in the VA (713).

The inductive charging coil assembly (712) in the GA (701) comprises a GA coil (707) and a primary compensating network (706). The VA (702) comprises the VA coil (708) and a secondary compensating network (709). The compensation network (706), (709) is also a parallel-series compensation circuit. As previously mentioned, the parallel-series compensation circuit advantageously permits to generate a voltage source at the VA coil (708) which amplitude depends upon the effective current flowing through the GA coil (707).

Figure 7 also shows the conductive charging stage OBC (200) for conductive charging of the EV. The OBC (200) of the VA (702) comprises the three phase PFC stage (201) for the three phase power source (103), the DC link comprising the DC link capacitor (202) and the isolated DC/DC battery charger (203).

An alternative solution is shown in Figure 7, the output of the VA compensation network (709) is connected to the input of the conductive charger three phase PFC stage (201) in the conductive charging OBC (200). Because the three phase PFC stage (201) can be composed of 3 half bridges based on MOSFETs (each of them including a parasitic body diode in parallel), the three phase PFC stage (201) stage can be used as a simple rectifier in order to obtain an adjusted continuous voltage **(V_{dc_VA})** that can be used to regulate the DC link of the conductive charger of the EV during an inductive charging process of the EV, thus affording the dedicated rectifier shown in the original solution as well as the DC link.

Even though reference has been made to a specific embodiment of the invention, it is obvious for a person skilled in the art that the WPT architectures described herein are susceptible to numerous variations and modifications, and that all the details mentioned can be substituted for other technically equivalent ones within the scope of protection defined by the attached claims.

## Claims

1. A wireless power transfer, WPT, (400) system for an electrical vehicle, EV, the system comprising a ground assembly, GA, (401) and a vehicle assembly, VA (402), and a conductive charger with a DC link, and a rectifier (410) in the VA (402) to obtain a continuous voltage **V_{dc_VA},** the GA (401) comprising a GA transmitter coil (407), the VA (402) comprising a VA receiver coil (408) magnetically coupled to the GA transmitter coil (407), **characterized in that** the WPT (400) system comprises:
a compensation strategy stage (406) (409) that comprises a parallel-series compensation network to obtain a voltage **Vv_{A}** in the VA receiver coil (408) proportional to an effective current **I_{p_rms}** in the GA transmitter coil (407);
a control strategy stage (445) with a voltage control loop (450) receiving as inputs the continuous voltage **V_{dc_VA}** and a reference DC link voltage and a current control loop (455) receiving as input the current flowing through the GA transmitter coil **I_{p_rms}** and an output from the voltage control loop,
wherein the control strategy stage (445) is configured to provide a control command to regulate voltage in the VA (402) to adjust the continuous voltage **V_{dc_VA}** based on the reference DC link voltage, and
wherein the DC link of the conductive charger of the EV connected to the rectifier (410) is configured to be regulated with the adjusted continuous voltage **V_{dc_VA}** during an inductive charging process of the EV.

2. The WPT system (400) for an EV according to claim 1, wherein the GA (401) comprises a DC-to-AC converter (404) regulated with the control command of the control strategy stage (445).

3. The WPT system (400) for an EV according to any of the preceding claims, wherein the GA (401) comprises an AC/DC converter (304) with power factor correction, PFC.

4. The WPT system (400) for an EV according to any of the preceding claims, wherein the GA (401) comprises a DC blocking and impedance matching network, IMN.

5. The WPT system (400) for an EV according to any of the preceding claims, wherein the GA (401) and the VA (402) comprise wireless communication means for at least transmitting the continuous voltage **V_{dc_VA}** and the reference DC link voltage from the VA(402) to the GA (401).

6. A WPT system (700) system for an EV comprising a conductive charger with a DC link, a GA (701) and a VA (702), the GA (701) comprising a GA transmitter coil (707), the VA (702) comprising a VA receiver coil (708) magnetically coupled to the GA transmitter coil (707), wherein a PFC stage of a conductive charger of the EV is connected with the voltage **V_{VA}** during an inductive charging process of the EV, **characterized in that** the WPT (700) comprises:
a compensation strategy (706) (709) that comprises a parallel-series compensation network to obtain a voltage **V_{VA}** in the VA receiver coil (709) proportional to an effective current **I_{p_rms}** in the GA transmitter coil (707); and
a control strategy stage (445) with a voltage control loop (450) receiving as inputs the continuous voltage **V_{dc_VA}** and a reference DC link voltage and a current control loop (455) receiving as input the current flowing through the GA transmitter coil **I_{p_rm},** and an output from the voltage control loop,
wherein the control strategy stage (445) is configured to provide a control command to regulate voltage in the VA (702) to adjust a continuous voltage **V_{dc_VA}** based on the reference DC link voltage,
wherein the **V_{dc_VA}** represents the voltage measured at the DC link of the conductive charger of the EV.

7. The WPT system (700) for an EV according to claim 5, wherein the GA (701) comprises a DC-to-AC converter (705) regulated with a control command of the control strategy stage (445).

8. The WPT system (700) for an EV according to claims 5 and 6, wherein the GA (701) comprises an AC/DC converter (704) with PFC.

9. The WPT system (700) for an EV according to claims 5 to 7, wherein the GA (701) comprises a DC blocking and impedance matching network (IMN).

10. The WPT system (700) for an EV according to claims 6 to 9, wherein the GA (701) and the VA (702) comprise wireless communication means for transmitting the continuous voltage **V_{dc_VA}** and the reference DC link voltage from the VA(402) to the GA (401).

11. An electric vehicle, comprising:
a conductive charging stage (200) having a DC link; and
the WPT system (400, 700) according to any of the claims 1 to 10,
wherein the WPT system (300, 700) regulates the DC link of the conductive charging stage (200).

12. A method for charging an EV with a WPT system according to claim 1 , the method comprising:
applying an effective current **I_{p_rms}** to a GA transmitter coil of the WPT,
obtaining a voltage **V_{VA}** in a VA receiver coil of the WPT proportional to the **I_{p_rms};**
obtaining a continuous voltage **V_{dc_VA}** in the VA of the WPT;
adjusting the continuous voltage **V_{dc_VA}** based on a reference DC link voltage;
regulating a DC link of a conductive charging of the EV with the adjusted continuous voltage **V_{dc_VA}.,**
wherein the **V_{dc_VA}** represents the voltage measured at the DC link of the conductive charger of the EV,
wherein the DC link of the conductive charging of the EV is connected to a rectifier.

13. A method for charging an EV, with a WPT system according to claim 6 , the method comprising:
applying a effective current **I_{p_rms}** to a GA transmitter coil of the WPT,
obtaining a voltage VvA in a VA receiver coil of the WPT proportional to the **I_{p_rms};**
supplying a PFC stage of a conductive charger of the EV with the voltage **V_{VA};**
obtaining an adjusted continuous voltage **V_{dc_VA};**
adjusting the continuous voltage **V_{dc_VA}** based on a reference DC link voltage;
regulating a DC link of the conductive charging of the EV with the adjusted continuous voltage **V_{dc_VA},**
wherein the **V_{dc_VA}** represents the voltage measured at the DC link of the conductive charger of the EV, and
wherein the DC link of the conductive charging of the EV is connected to a rectifier.

14. The method according to claims 11 or 12, further comprising:
transmitting the continuous voltage **V_{dc_VA}** and the reference DC link voltage from the VA to the GA of the WPT systems (400, 700).

## Patentansprüche

1. Drahtloses Leistungsübertragungssystem (WPT-System) (400) für ein Elektrofahrzeug, EV, wobei das System eine Bodenanordnung, GA, (401) und eine Fahrzeuganordnung, VA (402) und ein leitfähiges Ladegerät mit einer DC-Verbindung und einen Gleichrichter (410) in der VA (402), um eine Gleichspannung V_{dc_VA}, zu erzielen, umfasst, wobei die GA (401) eine GA-Senderspule (407) umfasst, wobei die VA (402) eine VA-Empfängerspule (408), die mit der GA-Senderspule (407) magnetisch gekoppelt ist, umfasst, **dadurch gekennzeichnet, dass** das WPT-System (400) umfasst:
eine Kompensationsstrategiestufe (406) (409), die ein parallel-serielles Kompensationsnetzwerk umfasst, um eine Spannung V_{VA} in der VA-Empfängerspule (408) zu erzielen, die zu einem effektiven Strom I_{p_ms} in der GA-Senderspule (407) proportional ist;
eine Steuerstrategiestufe (445) mit einer Spannungsregelschleife (450), die als Eingaben die Gleichspannung V_{dc_VA} und eine Referenz-DC-Verbindungsspannung empfängt, und mit einer Stromregelschleife (455), die als Eingabe den Strom I_{p_ms}, der durch die GA-Senderspule fließt, und eine Ausgabe aus der Spannungsregelschleife empfängt,
wobei die Steuerstrategiestufe (445) dazu konfiguriert ist, einen Steuerbefehl bereitzustellen, um die Spannung in der VA (402) zu regulieren, um die Gleichspannung V_{dc_VA} basierend auf der Referenz-DC-Verbindungsspannung anzupassen, und
wobei die DC-Verbindung des leitfähigen Ladegeräts des EV, die an den Gleichrichter (410) angeschlossen ist, dazu konfiguriert ist, mit der angepassten Gleichspannung V_{dc_VA} während eines induktiven Ladevorgangs des EV reguliert zu werden.

2. WPT-System (400) für ein EV nach Anspruch 1, wobei die GA (401) einen DC/AC-Wandler (404) umfasst, der mit dem Steuerbefehl der Steuerstrategiestufe (445) reguliert wird.

3. WPT-System (400) für ein EV nach einem der vorhergehenden Ansprüche, wobei die GA (401) einen AC/DC-Wandler (304) mit Leistungsfaktorkorrektur, PFC, umfasst.

4. WPT-System (400) für ein EV nach einem der vorhergehenden Ansprüche, wobei die GA (401) ein DC-Sperr- und Impedanzanpassungs-Netzwerk, IMN, umfasst.

5. WPT-System (400) für ein EV nach einem der vorhergehenden Ansprüche, wobei die GA (401) und die VA (402) drahtlose Kommunikationsmittel mindestens zum Senden der Gleichspannung V_{dc_VA} und der Referenz-DC-Verbindungsspannung von der VA (402) an die GA (401) umfassen.

6. WPT-System (700) für ein EV, umfassend ein leitfähiges Ladegerät mit einer DC-Verbindung, einer GA (701) und einer VA (702), wobei die GA (701) eine GA-Senderspule (707) umfasst, wobei die VA (702) eine VA-Empfängerspule (708), die mit der GA-Senderspule (707) magnetisch gekoppelt ist, umfasst, wobei eine PFC-Stufe eines leitfähigen Ladegeräts des EV an die Spannung V_{VA} während eines induktiven Ladevorgangs des EV angeschlossen ist,
**dadurch gekennzeichnet, dass** das WPT (700) umfasst:
eine Kompensationsstrategie (706) (709), die ein parallel-serielles Kompensationsnetzwerk umfasst, um eine Spannung V_{VA} in der VA-Empfängerspule (709) zu erzielen, die zu einem effektiven Strom I_{p_ms} in der GA-Senderspule (707) proportional ist; und
eine Steuerstrategiestufe (445) mit einer Spannungsregelschleife (450), die als Eingaben die Gleichspannung V_{dc_VA} und eine Referenz-DC-Verbindungsspannung empfängt, und eine Stromregelschleife (455), die als Eingabe den Strom I_{p_ms}, der durch die GA-Senderspule fließt, und eine Ausgabe aus der Spannungsregelschleife empfängt,
wobei die Steuerstrategiestufe (445) dazu konfiguriert ist, einen Steuerbefehl bereitzustellen, um die Spannung in der VA (702) zu regulieren, um eine Gleichspannung V_{dc_VA} basierend auf der Referenz-DC-Verbindungsspannung anzupassen, und
wobei V_{dc_VA} die Spannung darstellt, die an der DC-Verbindung des leitfähigen Ladegeräts des EV gemessen wird.

7. WPT-System (700) für ein EV nach Anspruch 5, wobei die GA (701) einen DC/AC-Wandler (705) umfasst, der mit einem Steuerbefehl der Steuerstrategiestufe (445) reguliert wird.

8. WPT-System (700) für ein EV nach Anspruch 5 und 6, wobei die GA (701) einen AC/DC-Wandler (704) mit PFC umfasst.

9. WPT-System (700) für ein EV nach Anspruch 5 bis 7, wobei die GA (701) ein DC-Sperr- und Impedanzanpassungs-Netzwerk (IMN) umfasst.

10. WPT-System (700) für ein EV nach Anspruch 6 bis 9, wobei die GA (701) und die VA (702) drahtlose Kommunikationsmittel zum Senden der Gleichspannung V_{dc_VA} und der Referenz-DC-Verbindungsspannung von der VA (402) an die GA (401) umfassen.

11. Elektrofahrzeug, umfassend:
eine leitfähige Ladestufe (200), die eine DC-Verbindung aufweist; und
das WPT-System (400, 700) nach einem der Ansprüche 1 bis 10,
wobei das WPT-System (300, 700) die DC-Verbindung der leitfähigen Ladestufe (200) reguliert.

12. Verfahren zum Laden eines EV mit einem WPT-System nach Anspruch 1, wobei das Verfahren umfasst:
Anlegen eines effektiven Stroms I_{p_ms} an eine GA-Senderspule des WPT,
Erzielen einer Spannung V_{VA} in einer VA-Empfängerspule des WPT, die zu I_{p_ms} proportional ist;
Erzielen einer Gleichspannung V_{dc_VA} in der VA des WPT;
Anpassen der Gleichspannung V_{dc_VA} basierend auf einer Referenz-DC-Verbindungsspannung;
Regulieren einer DC-Verbindung eines leitfähigen Ladegeräts des EV mit der angepassten Gleichspannung V_{dc_VA},
wobei V_{dc_VA} die Spannung darstellt, die an der DC-Verbindung des leitfähigen Ladegeräts des EV gemessen wird,
wobei die DC-Verbindung des leitfähigen Ladegeräts des EV an einen Gleichrichter angeschlossen ist.

13. Verfahren zum Laden eines EV, mit einem WPT-System nach Anspruch 6, wobei das Verfahren umfasst:
Anlegen eines effektiven Stroms I_{p_ms} an eine GA-Senderspule des WPT,
Erzielen einer Spannung V_{VA} in einer VA-Empfängerspule des WPT, die zu I_{p_ms} proportional ist;
Versorgen einer PFC-Stufe eines leitfähigen Ladegeräts des EV mit einer Spannung V_{VA};
Erzielen einer angepassten Gleichspannung V_{dc_VA};
Anpassen der Gleichspannung V_{dc_VA} basierend auf einer Referenz-DC-Verbindungsspannung;
Regulieren einer DC-Verbindung des leitfähigen Ladegeräts des EV mit der angepassten Gleichspannung V_{dc_VA},
wobei V_{dc_VA} die Spannung darstellt, die an der DC-Verbindung des leitfähigen Ladegeräts des EV gemessen wird, und
wobei die DC-Verbindung des leitfähigen Ladegeräts des EV an einen Gleichrichter angeschlossen ist.

14. Verfahren nach Anspruch 11 oder 12, ferner umfassend: Senden der Gleichspannung V_{dc_VA} und der Referenz-DC-Verbindungsspannung von der VA an die GA des WPT-Systems (400, 700).

## Revendications

1. Système de transfert d'énergie sans fil, WPT, (400) pour un véhicule électrique, EV, le système comprenant un ensemble de masse, GA, (401), et un ensemble de véhicule, VA, (402), et un chargeur conducteur avec une liaison à courant continu, et un redresseur (410) dans l'ensemble VA (402) pour obtenir une tension continue, V_{dc_VA}, l'ensemble GA (401) comprenant une bobine émettrice d'ensemble GA (407), l'ensemble VA (402) comprenant une bobine réceptrice d'ensemble VA (408) couplée magnétiquement à la bobine émettrice d'ensemble GA (407), **caractérisé en ce que** le système de transfert WPT (400) comprend :
un étage de stratégie de compensation (406) (409) qui comprend un réseau de compensation parallèle-série pour obtenir une tension V_{VA}, dans la bobine réceptrice d'ensemble VA (408), proportionnelle à un courant efficace I_{p_rms} dans la bobine émettrice d'ensemble GA (407) ;
un étage de stratégie de commande (445) avec une boucle de commande de tension (450) recevant, en tant qu'entrées, la tension continue V_{dc_VA} et une tension de liaison à courant continu de référence, et une boucle de commande de courant (455) recevant, en tant qu'entrée, le courant circulant à travers la bobine émettrice d'ensemble GA I_{p_rms} et une sortie en provenance de la boucle de commande de tension ;
dans lequel l'étage de stratégie de commande (445) est configuré de manière à fournir une instruction de commande pour réguler une tension dans l'ensemble VA (402) afin d'ajuster la tension continue V_{dc_VA} sur la base de la tension de liaison à courant continu de référence ; et
dans lequel la liaison à courant continu du chargeur conducteur du véhicule EV connecté au redresseur (410) est configurée pour être régulée avec la tension continue ajustée V_{dc_VA} pendant un processus de charge inductive du véhicule EV.

2. Système de transfert WPT (400) pour un véhicule EV selon la revendication 1, dans lequel l'ensemble GA (401) comprend un convertisseur courant continu vers courant alternatif (404) régulé avec l'instruction de commande de l'étage de stratégie de commande (445).

3. Système de transfert WPT (400) pour un véhicule EV selon l'une quelconque des revendications précédentes, dans lequel l'ensemble GA (401) comprend un convertisseur courant alternatif/courant continu (304) avec correction de facteur de puissance, PFC.

4. Système de transfert WPT (400) pour un véhicule EV selon l'une quelconque des revendications précédentes, dans lequel l'ensemble GA (401) comprend un réseau de blocage de courant continu et d'adaptation d'impédance, IMN.

5. Système de transfert WPT (400) pour un véhicule EV selon l'une quelconque des revendications précédentes, dans lequel l'ensemble GA (401) et l'ensemble VA (402) comprennent des moyens de communication sans fil pour au moins transmettre la tension continue V_{dc_VA} et la tension de liaison à courant continu de référence, de l'ensemble VA (402) à l'ensemble GA (401).

6. Système de transfert WPT (700) pour un véhicule EV comprenant un chargeur conducteur avec une liaison à courant continu, un ensemble GA (701) et un ensemble VA (702), l'ensemble GA (701) comprenant une bobine émettrice d'ensemble GA (707), l'ensemble VA (702) comprenant une bobine réceptrice d'ensemble VA (708) couplée magnétiquement à la bobine émettrice d'ensemble GA (707), dans lequel un étage PFC d'un chargeur conducteur du véhicule EV est connecté à la tension V_{VA} pendant un processus de charge inductive du véhicule EV, **caractérisé en ce que** le système WPT (700) comprend :
un étage de stratégie de compensation (706) (709) qui comprend un réseau de compensation parallèle-série pour obtenir une tension V_{VA}, dans la bobine réceptrice d'ensemble VA (709), proportionnelle à un courant efficace I_{p_rms} dans la bobine émettrice d'ensemble GA (707) ; et
un étage de stratégie de commande (445) avec une boucle de commande de tension (450) recevant, en tant qu'entrées, la tension continue V_{dc_VA} et une tension de liaison à courant continu de référence, et une boucle de commande de courant (455) recevant, en tant qu'entrée, le courant circulant à travers la bobine émettrice d'ensemble GA I_{p_rms} et une sortie en provenance de la boucle de commande de tension ;
dans lequel l'étage de stratégie de commande (445) est configuré de manière à fournir une instruction de commande visant à réguler une tension dans l'ensemble VA (702) pour ajuster une tension continue V_{dc_VA} sur la base de la tension de liaison à courant continu de référence ;
dans lequel la tension V_{dc_VA} représente la tension mesurée au niveau de la liaison à courant continu du chargeur conducteur du véhicule EV.

7. Système de transfert WPT (700) pour un véhicule EV selon la revendication 5, dans lequel l'ensemble GA (701) comprend un convertisseur courant continu vers courant alternatif (705) régulé avec une instruction de commande de l'étage de stratégie de commande (445).

8. Système de transfert WPT (700) pour un véhicule EV selon l'une quelconque des revendications 5 et 6, dans lequel l'ensemble GA (701) comprend un convertisseur courant alternatif/courant continu (704) avec correction PFC.

9. Système de transfert WPT (700) pour un véhicule EV selon l'une quelconque des revendications 5 à 7, dans lequel l'ensemble GA (701) comprend un réseau de blocage de courant continu et d'adaptation d'impédance, IMN.

10. Système de transfert WPT (700) pour un véhicule EV selon l'une quelconque des revendications 6 à 9, dans lequel l'ensemble GA (701) et l'ensemble VA (702) comprennent des moyens de communication sans fil pour transmettre la tension continue V_{dc_VA} et la tension de liaison à courant continu de référence, de l'ensemble VA (402) à l'ensemble GA (401).

11. Véhicule électrique, comprenant :
un étage de charge conducteur (200) présentant une liaison à courant continu ; et
le système de transfert WPT (400, 700) selon l'une quelconque des revendications 1 à 10 ;
dans lequel le système de transfert WPT (300, 700) régule la liaison à courant continu de l'étage de charge conducteur (200).

12. Procédé de charge d'un véhicule EV avec un système WPT selon la revendication 1, le procédé comprenant :
appliquer un courant efficace I_{p_rms} à une bobine émettrice d'ensemble GA du système WPT ;
obtenir une tension V_{VA} dans une bobine réceptrice d'ensemble VA du système de transfert WPT, proportionnelle au courant I_{p_rms} ;
obtenir une tension continue V_{dc_VA} dans l'ensemble VA du système WPT ;
ajuster la tension continue V_{dc_VA} sur la base d'une tension de liaison à courant continu de référence ;
réguler une liaison à courant continu d'un chargeur conducteur du véhicule EV avec la tension continue ajustée V_{dc_VA} ;
dans lequel la tension continue V_{dc_VA} représente la tension mesurée au niveau de la liaison à courant continu du chargeur conducteur du véhicule EV ;
dans lequel la liaison à courant continu du chargeur conducteur du véhicule EV est connectée à un redresseur.

13. Procédé de charge d'un véhicule EV, avec un système WPT selon la revendication 6, le procédé comprenant :
appliquer un courant efficace I_{p_rms} à une bobine émettrice d'ensemble GA du système WPT ;
obtenir une tension V_{VA} dans une bobine réceptrice d'ensemble VA du système WPT, proportionnelle au courant efficace I_{p_rms} ;
fournir un étage PFC d'un chargeur conducteur du véhicule EV avec la tension V_{VA} ;
obtenir une tension continue ajustée **V_{dc_VA}** ;
ajuster la tension continue V_{dc_VA} sur la base d'une tension de liaison à courant continu de référence ;
réguler une liaison à courant continu du chargeur conducteur du véhicule EV avec la tension continue ajustée V_{dc_VA;}
dans lequel la tension continue V_{dc_VA} représente la tension mesurée au niveau de la liaison à courant continu du chargeur conducteur du véhicule EV ; et
dans lequel la liaison à courant continu du chargeur conducteur du véhicule EV est connectée à un redresseur.

14. Procédé selon l'une quelconque des revendications 11 et 12, comprenant en outre l'étape ci-dessous consistant à :
transmettre la tension continue V_{dc_VA} et la tension de liaison à courant continu de référence, de l'ensemble VA à l'ensemble GA des systèmes WPT (400, 700).
